(19) **Europäisches Patentamt / European Patent Office / Office européen des brevets**

(11) **EP 2 279 621 B1**

(12) **FASCICULE DE BREVET EUROPEEN**

(45) Date de publication et mention de la délivrance du brevet:
**13.02.2013 Bulletin 2013/07**

(51) Int Cl.:
***H04N 7/26*** *(2006.01)*    ***H04N 7/46*** *(2006.01)*

(21) Numéro de dépôt: **09745985.3**

(22) Date de dépôt: **23.04.2009**

(86) Numéro de dépôt international:
**PCT/FR2009/050753**

(87) Numéro de publication internationale:
**WO 2009/138666 (19.11.2009 Gazette 2009/47)**

(54) **PROCÉDÉ DE CODAGE, DE DÉCODAGE, CODEUR ET DÉCODEUR**

CODIERVERFAHREN, DECODIERVERFAHREN, CODER UND DECODER

METHOD OF CODING, DECODING, CODER AND DECODER

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.04.2008 FR 0852792**

(43) Date de publication de la demande:
**02.02.2011 Bulletin 2011/05**

(73) Titulaire: **Thomson Licensing**
**92130 Issy-les-Moulineaux (FR)**

(72) Inventeurs:
• **FRANCOIS, Edouard**
  **F-35890 Bourg Des Comptes (FR)**
• **LE MEUR, Olivier**
  **F-35160 Talensac (FR)**
• **VIERON, Jérôme**
  **F-75015 PARIS (FR)**

(74) Mandataire: **Esselin, Sophie**
**Marks & Clerk France**
**Conseils en Propriété Industrielle**
**Immeuble Visium**
**22, Avenue Aristide Briand**
**94117 Arcueil Cedex (FR)**

(56) Documents cités:
• **WEI LAI ET AL: "A content-based bit allocation model for video streaming" MULTIMEDIA AND EXPO, 2004. ICME '04. 2004 IEEE INTERNATIONAL CONFERENCE ON, IEEE, PISCATAWAY, NJ, USA, vol. 2, 27 juin 2004 (2004-06-27), pages 1315-1318, XP010771069 ISBN: 978-0-7803-8603-7**

• **CHIH-WEI TANG: "Spatiotemporal Visual Considerations for Video Coding" IEEE TRANSACTIONS ON MULTIMEDIA, IEEE SERVICE CENTER, PISCATAWAY, NJ, US, vol. 9, no. 2, 1 février 2007 (2007-02-01), pages 231-238, XP011157485 ISSN: 1520-9210**

• **HONGLIANG LI ET AL: "Unsupervized Video Segmentation With Low Depth of Field" IEEE TRANSACTIONS ON CIRCUITS AND SYSTEMS FOR VIDEO TECHNOLOGY, IEEE SERVICE CENTER, PISCATAWAY, NJ, US, vol. 17, no. 12, 1 décembre 2007 (2007-12-01), pages 1742-1751, XP011195136 ISSN: 1051-8215**

• **ZHENZHONG CHEN ET AL: "Dynamic Bit Allocation for Multiple Video Object Coding" IEEE TRANSACTIONS ON MULTIMEDIA, IEEE SERVICE CENTER, PISCATAWAY, NJ, US, vol. 8, no. 6, 1 décembre 2006 (2006-12-01), pages 1117-1124, XP011150520 ISSN: 1520-9210**

• **OSTERMANN J ET AL: "Natural and synthetic video in MPEG-4" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, vol. 6, 12 mai 1998 (1998-05-12), pages 3805-3808, XP010279651 ISBN: 978-0-7803-4428-0**

• **SCHWARZ H ET AL: "Overview of the Scalable Video Coding Extension of the H.264/AVC Standard" IEEE TRANSACTIONS ON CIRCUITS AND SYSTEMS FOR VIDEO TECHNOLOGY, IEEE SERVICE CENTER, PISCATAWAY, NJ, US, vol. 17, no. 9, 1 septembre 2007 (2007-09-01), pages 1103-1120, XP011193019 ISSN: 1051-8215**

EP 2 279 621 B1

**Description**

La présente invention concerne un procédé de codage, un procédé de décodage, un codeur et un décodeur.

Les instances de normalisation MPEC (de l'anglais « *Moving Picturo Export Group* ») et ITU (de l'anglais « *International Telecommunication Union* ») ont défini de nombreux standards de compression vidéo tels que le MPEG1, le MPEG2, le MPEG4 et le H.264. L'efficacité en compression de ces différents standards a permis l'émergence de nombreuses applications vidéo.

Néanmoins, malgré des performances toujours meilleures, la problématique de la compression vidéo reste toujours d'actualité et il est toujours nécessaire de chercher à augmenter le taux de compression à qualité constante, pour permettre le développement de nouveaux services émergents tels que la distribution de vidéo de haute qualité sur réseau Internet ou de la vidéo sur les téléphones mobiles.

Le document de Wei Lai et al intitulé « A content-based bit allocation model for video streaming » et publié lors de la conférence ICME 2004 (vol.2 pages 1315-1318) définit un modèle d'allocation de débit basé sur un modèle d'attention visuel qui permet d'améliorer la qualité des régions d'intérêt dans l'image.

Le document de Chih-Wei Tang intitulé « Spatio-temporal considerations for video coding » et publié dans IEEE transactions on multimedia (vol.9, n°2, pages 231-238) décrit une méthode d'ajustement local d'un pas de quantification en fonction qui tient compte des caractérisques du système visuel humain.

Le document de Hongliang Li et al intitulé « Unsupervised video segmentation with low depth of field » publié dans IEEE transactions on circuits and systems for video technology (vol. 17, n°12, pages1742-1751) décrit une méthode de segmentation d'image permettant d'extraire des objets dans une image de profondeur de champ.

Le document de Zhenzhong Chen et al intitulé « Dynamic bit allocation for multiple video object coding » publié dans IEEE transactions on multimédia (vol.8, n°6, pages 1117-1124) décrit une méthode d'allocation de débit permettant d'améliorer la qualité subjective dans un système de codage vidéo basé objet.

Le document de Ostermann et al intitulé « Natural and synthetic video in MPEG4» publié dans les actes de la conférence ICASSP en mai 1998 (vol. 6, pages 3805-3808) passe en revue les outils du standard de codage MPEG-4 partie 2.

Le document de Schwarz et al intitulé « Overview of the scalable video coding extension of the H264/AVC standard» publié dans IEEE transactions on circuits and systems for video technology (vol.17, n°9, pages1103-1120) décrit les outils de codage du standard de codage SVC.

L'invention comme revendiquée a pour but de proposer un procédé de codage et de décodage permettant d'augmenter le taux de compression des données tout en préservant le rendu visuel des images reconstruites.

A cet effet, l'invention a pour objet un procédé de codage d'une portion d'image d'une image d'une séquence vidéo, au moins une image de la séquence vidéo étant une image clé, caractérisé en ce que le procédé comprend les étapes suivantes :

a) calculer une carte de saillance de la ou de chaque image clé ;
b) estimer pour la portion d'image à coder, au moins un vecteur de mouvement (V1, V2) pointant vers une portion de la ou de chaque image clé ;
c) compenser en mouvement au moins une portion de carte de saillance à l'aide du ou de chaque vecteur de mouvement estimé (V1, V2) pour obtenir, pour ladite portion d'image, au moins une portion de carte de saillance prédite ; et
d) coder la portion d'image en fonction du niveau de saillance de la ou chaque portion de carte de saillance prédite.

Suivant des modes particuliers de mise en oeuvre, le procédé de codage comporte l'une ou plusieurs des caractéristiques suivantes, prises isolément ou en combinaison :

- l'étape d) comprend les étapes suivantes :
- déterminer le niveau de saillance de la ou chaque portion de carte de saillance prédite;
- comparer un niveau de saillance prédéfini (S1) et le niveau de saillance (S) de la portion de carte de saillance prédite ; et
- coder la portion d'image à l'aide d'une méthode sélectionnée en fonction du résultat de ladite comparaison, ladite méthode étant sélectionnée parmi au moins une première et une deuxième méthodes,
- la première méthode de codage est définie par la norme H.264, la deuxième méthode de codage étant une méthode basée sur la norme H.264 dans laquelle l'amplitude des composantes de chaque vecteur de mouvement (V1, V2) est supérieure au ¼ de pixel,
- la deuxième méthode de codage comprend une interpolation de mouvement basée sur un filtre d'interpolation différent du filtre utilisé dans la première méthode, et une étape de codage et de transmission d'informations de mouvement définies par des paramètres affines,

- la portion d'image d'une image de la séquence vidéo est codée selon une méthode de compression scalable par couches, les images clé étant destinées à être codées dans une couche de base, la portion d'image étant codée dans une couche haute,
- le procédé de codage comprend également les étapes suivantes :
- estimer un vecteur de mouvement (V5) partant d'une portion d'une deuxième image intermédiaire et pointant vers au moins une partie d'une portion d'une première image intermédiaire ;
- compter le nombre de pixels de la partie de la portion de la première image intermédiaire.

Lorsque le nombre de pixel compté est supérieur à un nombre prédéfini (Nmin), le procédé de codage comprend l'étape suivante :

- coder la potion de la deuxième image intermédiaire à l'aide de la portion de la première image intermédiaire et par la méthode sélectionnée pour coder la portion de la première image intermédiaire,
- lors d'un codage bidirectionnel d'une portion d'image intermédiaire à partir d'une portion de la première image clé et d'une portion de la deuxième image clé, le niveau de saillance (S) comparé au niveau de saillance prédéfini (S1) étant fonction du niveau de saillance (S12) d'une première portion de carte de saillance prédite à partir d'un premier vecteur de mouvement (V1), et du niveau de saillance (S14) d'une deuxième portion de carte de saillance prédite à partir d'un deuxième vecteur de mouvement (V2); ladite portion d'image intermédiaire étant codée à partir d'une moyenne des prédictions de la portion de la première image clé et de la portion de la deuxième image clé, ladite moyenne étant pondérée par lesdits niveaux de saillance (S12, S14) de la première et de la deuxième portions de carte de saillance prédites,
- l'étape a) comprend une étape de codage de la ou chaque image clé, ladite étape générant des images clé reconstruites ; la carte de saillance étant calculée de la ou de chaque image clé reconstruite,

Le procédé de l'invention comporte également un procédé de décodage d'un flux binaire comprenant des données compressées représentatives de vecteurs de mouvement (V1, V2), d'images et d'images clé d'une séquence vidéo en vue de la reconstruction d'une portion d'image à reconstruire. Selon des modes de réalisation particuliers il comprend les étapes suivantes :

a) reconstruire la ou chaque image clé à partir des données compressées ;
b) calculer une carte de saillance de la ou de chaque image clé reconstruite ;
c) décoder au moins un vecteur de mouvement (V1, V2) pour la portion d'image à reconstruire pointant vers une portion de l'image clé ;
d) compenser en mouvement au moins une portion de carte de saillance à l'aide du vecteur de mouvement décodé (V1, V2) pour obtenir pour ladite portion d'image à reconstruire, une portion de carte de saillance prédite ; et
e) reconstruire la portion d'image à reconstruire en fonction du niveau de saillance de la carte de saillance prédite,

   - l'étape e) comprend les étapes suivantes :
   - déterminer le niveau de saillance de la ou chaque portion de carte de saillance prédite ;
   - comparer un niveau de saillance prédéfini (S1) et le niveau de saillance (S) de la portion de carte de saillance prédite ; et
   - reconstruire la portion d'image à reconstruire à l'aide d'une méthode sélectionnée en fonction du résultat de ladite comparaison, ladite méthode étant sélectionnée parmi au moins une première et une deuxième méthodes.
   - la portion d'image d'une image de la séquence vidéo est décodée selon une méthode de compression scalable par couches, la reconstruction de données compressées d'une couche de base générant les images clé, la reconstruction de données compressées d'une couche haute générant la portion d'image à reconstruire,
   - le procédé peut également comporter les étapes suivantes :
   - décoder au moins un vecteur de mouvement (V1, V2) partant d'une portion d'une deuxième image intermédiaire et pointant vers au moins une partie d'une portion d'une première image intermédiaire décodée ; le procédé comportant en outre les étapes suivantes :
   - compter le nombre de pixels de la partie de la portion de la première image intermédiaire décodée ;

Lorsque le nombre de pixel compté est supérieur à un nombre prédéfini (Nmin), le procédé comporte les étapes suivantes :

- reconstruire la portion de la deuxième image intermédiaire à l'aide de la portion de la première image intermédiaire et par la méthode sélectionnée pour reconstruire la portion de la première image intermédiaire,
- lors d'une reconstruction d'une portion d'image intermédiaire codée selon une prédiction bidirectionnelle à partir d'une portion de la première image clé et d'une portion de la deuxième image clé, le niveau de saillance (S) comparé au niveau de saillance prédéfini (S1) est fonction du niveau de saillance (S12) d'une première portion de carte de saillance prédite à partir d'un premier vecteur de mouvement (V1), et du niveau de saillance (S14) d'une deuxième portion de carte de saillance prédite à partir d'un deuxième vecteur de mouvement (V2) ; ladite portion d'image intermédiaire étant reconstruite à partir d'une moyenne des prédictions de la portion de la première image clé et de la portion de la deuxième image clé, ladite moyenne étant pondérée par lesdits niveaux de saillance (S12, S14) de la première et de la deuxième portions de carte de saillance prédites.

Par ailleurs, l'invention concerne également un codeur apte à coder des images d'une séquence vidéo, au moins une image étant une image clé, caractérisé en ce que le codeur comprend :

- une unité de calcul d'une carte de saillance de la ou de chaque image clé ;
- une unité d'estimation apte à estimer pour la portion d'image à coder au moins un vecteur de mouvement (V1, V2) pointant vers une portion de la ou de chaque image clé ;
- une unité de compensation apte à compenser en mouvement la ou chaque portion de carte de saillance à l'aide du ou de chaque vecteur de mouvement estimé (V1, V2) pour obtenir, pour ladite portion d'image, au moins une portion de carte de saillance prédite ; et
- une unité de codage apte à coder la portion d'image en fonction du niveau de saillance de la ou chaque portion de carte de saillance prédite.

Enfin, l'invention concerne un décodeur d'un flux binaire comprenant des données compressées représentatives de vecteurs de mouvement (V1, V2), d'images et d'images clé d'une séquence vidéo en vue de la reconstruction d'une portion d'image à reconstruire, le décodeur comprenant :

- une unité de reconstruction de la ou de chaque image clé à partir des données compressées ;
- une unité de calcul de carte de saillance de la ou de chaque image clé reconstruite ;
- une unité de décodage apte à décoder au moins un vecteur de mouvement (V1, V2) pour la portion d'image à reconstruire (54) pointant vers une portion de la ou chaque image clé ;
- une unité de compensation en mouvement apte à compenser en mouvement au moins une portion de carte de saillance à l'aide du vecteur de mouvement décodé (V1, V2) pour obtenir, pour ladite portion d'image à reconstruire, une portion de carte de saillance prédite ; et
- une unité de reconstruction apte à reconstruire la portion d'image à reconstruire en fonction du niveau de saillance de la portion de carte de saillance prédite.

L'invention sera mieux comprise à la lecture de la description qui va suivre, donnée uniquement à titre d'exemple et faite en se référant aux dessins annexés, sur lesquels :

- la figure 1 est une représentation schématique d'un codeur selon l'invention ;
- la figure 2 est une représentation schématique d'un décodeur selon l'invention ;
- la figure 3 est un diagramme du procédé de codage selon l'invention ;
- la figure 4 est un schéma illustrant le procédé de compensation de mouvement mise en oeuvre lors du codage et du décodage selon l'invention pour une portion d'image codée selon une prédiction monodirectionnelle ;
- la figure 5 est un diagramme du procédé de décodage selon l'invention ;
- la figure 6 est un schéma illustrant le procédé de compensation de mouvement mise en oeuvre lors du codage et du décodage selon l'invention pour une portion d'image codée selon une prédiction bidirectionnelle ;
- la figure 7 est un schéma illustrant le codage d'une deuxième image intermédiaire se basant au moins sur une première image intermédiaire ; et
- la figure 8 est un diagramme illustrant une partie du procédé de codage d'une deuxième image intermédiaire se basant sur au moins une première image intermédiaire.

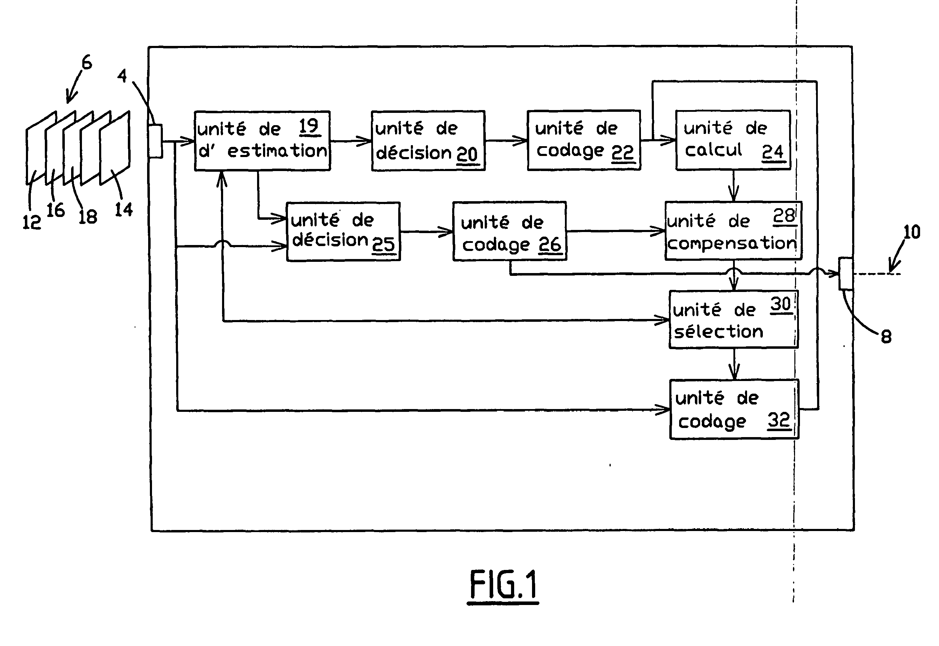

En référence à la figure 1, le codeur 2 comprend une entrée 4 propre à recevoir une séquence vidéo 6 à coder et une sortie 8 propre à émettre un flux binaire 10.

La séquence vidéo 6 comprend un ou plusieurs groupes d'images généralement appelé GOP (de l'anglais « Group Of Pictures ») formé de au moins deux images clé 12, 14 encadrant une série d'images généralement appelées images intermédiaires 16, 18 (au moins une image clé précédant les images intermédiaires et au moins une image clé suivant les images intermédiaires).

Les images clé 12, 14 et les images intermédiaires 16, 18 sont partitionnées en macroblocs, blocs, sous blocs ou régions.

Les notions de macroblocs, blocs, sous blocs sont similaires aux notions « macroblocks », « partitions » et « sub-partitions » utilisées par exemple dans MPEG-4 et définies dans le document JVT-M050d4, Draft of Version 4 of H.264/AVC (ITU-T Recommendation H.264 and ISO/IEC 14496-10 (MPEG-4 part 10) Advanced Video Coding), Palma de Mallorca, ES 18-22 Oct., 2004.

Un macrobloc est un ensemble de 16x16 pixels. Un tel macrobloc peut être partitionné en des blocs de 16x8, de 8x16, de 8x8 blocs. Chaque bloc pouvant être partitionné en des sous blocs de 4x8, 8x4 et 4x4 pixels. Les régions n'ont pas de taille prédéfinie et correspondent à des zones des images. Dans la suite de la description, les macroblocs, blocs, sous blocs et régions sont dénommés portions d'image.

Le codeur 2 contient une unité 19 d'estimation de vecteurs de mouvement reliée à l'entrée 4, une unité de décision de codage 20 reliée à l'unité d'estimation 19, une unité de codage 22 connectée à l'unité de décision 20 et à la sortie 8, et une unité 24 de calcul de cartes de saillance reliée à l'unité de codage 22.

L'unité d'estimation 19 de vecteurs de mouvement est apte à déterminer pour chaque portion de chacune des images intermédiaires 16, 18 des vecteurs de mouvement entre cette portion d'image intermédiaire et, soit une portion d'une ou plusieurs autres images intermédiaires, soit une portion d'une ou plusieurs images clé 12, 14, ainsi que pour chaque portion de chacune des images clé 12, 14 des vecteurs de mouvement entre cette portion d'image clé et une portion d'une autre image clé.

L'unité d'estimation 19 de vecteurs de mouvement doit être apte à estimer des vecteurs de mouvement proches d'un champ physique, c'est-à-dire réels pour que les cartes de saillance des images intermédiaires qui vont être interpolées dans le sens du mouvement soient cohérentes temporellement entre elles et avec les cartes de saillance des images clé. Une telle unité d'estimation est par exemple décrite dans le document [Tourapis, Au, Liou, Fast Motion Estimation using Circular Zonal Search, Proceedings of Visual Communications and Image Processing 1999 (VCIP'99)].

En variante, une unité d'estimation 19 de type spatiotemporellement hiérarchique peut être utilisée.

L'unité de décision 20 est apte à déterminer pour chaque macrobloc des images clé 12, 14 son mode de codage (par exemple tel que spécifié en section 7.4.5 du document JVT-M050d4), son partitionnement en portions d'image, c'est-à-dire son partitionnement soit en régions, en macroblocs, blocs, etc., les informations de prédiction spatiale ou de mouvement (images de référence, vecteurs de mouvement associés), le résidu de prédiction transformé et quantifié.

L'unité de codage 22 est propre à coder pour les images clé les décisions de codage prises par l'unité 20 et les données associées (modes de codage, partitionnement des portions d'image, vecteurs de mouvement et les données images, résidus de prédiction transformés et quantifiés ...).

L'unité de calcul 24 calcule les cartes de saillance des images clé 12, 14 à partir des images clé décodées localement et des données de mouvement codées qui leur sont associées.

A cet effet, l'unité de calcul 24 utilise par exemple la méthode présentée dans le document [O. Le Meur, P. Le Callet and D. Barba, Predicting visual fixation on video based on low-level visual features, Vision Research, Vol 47/19 pp 2483-2498, Septembre 2007].

Le codeur 2 comprend en outre une unité 25 de décision de mode de codage reliée à l'entrée 4 et à l'unité d'estimation 19, une unité 26 de codage des décisions de codage connectée à l'unité 25 et à la sortie 8, et une unité 28 de compensation en mouvement reliée à l'unité de codage 26 et à l'unité de calcul 24.

L'unité 25 de décision de codage est apte à décider le mode de codage de chaque portion d'image des images intermédiaires parmi les modes intra, inter monodirectionnel ou inter bidirectionnel tels que définis dans la norme H. 264, les informations de partitionnement des portions d'image et l'index des images de référence. Cette unité 25 utilise en entrée les données issues de l'unité d'estimation 19.

L'unité de codage 26 code l'ensemble des décisions de codage prises par l'unité 25 de décision de codage.

L'unité de compensation 28 est apte à compenser en mouvement des portions de carte de saillance des images clé à l'aide des vecteurs de mouvement estimés par l'unité d'estimation 19 afin de déterminer sur les portions d'image des images intermédiaires un niveau de saillance déduit des cartes de saillance des images clé.

Le codeur 2 comprend en outre une unité de sélection 30 reliée à l'unité de compensation 28 et à l'unité d'estimation 19, ainsi qu'une unité de codage 32 reliée à l'entrée 4, à l'unité de sélection 30 et à la sortie 8.

L'unité de sélection 30 est apte à analyser le niveau de saillance S des portions de carte de saillance compensées en mouvement et à sélectionner une méthode de codage des portions d'image des images intermédiaires 16, 18 en fonction de ce niveau de saillance, comme explicité ultérieurement.

L'unité de codage 32 est propre à coder les portions d'image des images intermédiaires 16, 18 à l'aide de la méthode de codage sélectionnée par l'unité de sélection 30.

Selon le mode de réalisation décrit, l'unité 30 peut sélectionner une première et une deuxième méthodes de codage.

La première méthode de codage est choisie pour les portions d'image présentant un niveau de saillance élevée, ces portions étant considérées comme devant être préservées lors du codage. La première méthode vise donc à coder la portion d'image de façon fidèle au signal d'origine, en corrigeant par le codage d'un résidu les éventuelles erreurs de prédiction.

La première méthode peut par exemple utiliser l'ensemble des modes de codage de la norme H.264.

La deuxième méthode de codage concerne les portions d'image présentant un niveau de saillance faible, ces portions étant considérées comme pouvant être restituées sans fidélité réelle au signal d'origine. On ne codera donc pas de résidu sur ces portions d'image et elles seront uniquement générées par prédiction temporelle. Pour que la prédiction soit d'une qualité équivalente aux portions d'image sur lesquelles on code du résidu, la deuxième méthode comprend une étape de compensation en mouvement plus précise. En particulier, la deuxième méthode de codage est basée sur une compensation de mouvement plus fine que celle employée dans la première méthode (par exemple, dans laquelle l'amplitude des composantes des vecteurs de mouvement est égale au 1/16 de pixel et non au ¼ de pixel comme dans H.264, avec un modèle de mouvement affiné et non translationnel comme dans H.264, ...).

L'interpolation de mouvement fine peut être par exemple réalisée à partir des filtres spécifiés dans MPEG-4 SVC pour l'interpolation de texture intra inter-couche, comme cela est décrit en table G-8 de la section G.8.6.2.3 du document JVT-X201 « Joint Draft ITU-T Rec. H.264 | ISO/IEC 14496-10 / Amd.3 Scalable video coding », Geneva, Switzerland, 29 June - 5 July, 2007. Elle peut aussi employer des filtres de support plus long (plus de 4 coefficients), à partir par exemple des modèles de filtre de Lanczos ou de filtre bi-cubique.

La deuxième méthode comprend une étape de compensation et de codage du mouvement basé sur des paramètres affines.

Par définition, lorsqu'une zone subit un tel mouvement, il existe un vecteur à six paramètres affines $\theta = (a, b, \alpha, \beta, \gamma, \delta)^T$ tel que le vecteur mouvement (dx, dy) de tout point (x, y) de la zone peut s'écrire ainsi :

$$\vec{\omega}_\theta(x,y) = \begin{pmatrix} dx \\ dy \end{pmatrix} = \begin{pmatrix} dx = a + \alpha\,x + \gamma\,y \\ dy = b + \beta\,x + \delta\,y \end{pmatrix}$$

En variante, les images clé et les images intermédiaires ne sont pas partitionnées.

Selon un mode de réalisation de l'invention, les images de la séquence vidéo sont codées selon une méthode de codage scalable par couches telle que définie par le standard SVC (de l'anglais « *Scalable Video Coding* »).

Selon cette méthode de codage scalable, chaque couche correspond à une résolution spatiale différente du contenu vidéo, de la résolution la plus faible codée dans une couche dite couche de base à la résolution la plus haute codée dans une couche dite couche haute. Les informations de codage d'une couche servent au codage des couches supérieures par exemple par l'utilisation de procédés de prédiction intercouche.

Dans ce cas, la première méthode de codage est basée sur le standard SVC avec une prédiction inter-couche utilisant une interpolation à l'aide d'un filtre à quatre coefficients et un codage de tous les coefficients des résidus.

La deuxième méthode de codage est basée sur le standard SVC avec une prédiction inter-couche utilisant une interpolation plus élaborée réalisée par exemple par des filtres plus longs sans codage des résidus.

En variante, cette deuxième méthode de codage comprend en outre une étape de rehaussement des contours de l'image.

Dans ce mode de réalisation, les cartes de saillance sont déterminées à partir des images de la couche de base qui sont reconstruites intégralement. Dans un mode d'implémentation préférentiel, toutes les images clé de la couche de base sont reconstruites entièrement. Sur ces images reconstruites de la couche de base, les cartes de saillance sont calculées. Lors du codage d'une portion d'image d'une image de la couche haute dont l'image de base a été entièrement reconstruite, on calcule son niveau de saillance à partir de la saillance de la portion d'image qui lui correspond dans l'image de la couche de base. Si l'image de la couche haute n'a pas d'image de la couche de base reconstruite, le niveau de saillance est déterminé par compensation de mouvement des cartes de saillance des images clé de la couche haute comme décrit précédemment.

Alternativement, d'autres méthodes de codage sont utilisées.

Le procédé de codage permet de coder des portions d'image des images intermédiaires 16, 18 selon des prédictions mono ou bidirectionnelles à partir d'une image d'une ou plusieurs images clé 12, 14 ou à partir d'autres images intermédiaires. Les procédés de codage et de décodage selon l'invention sont décrits ci-après dans chacune de ces situations.

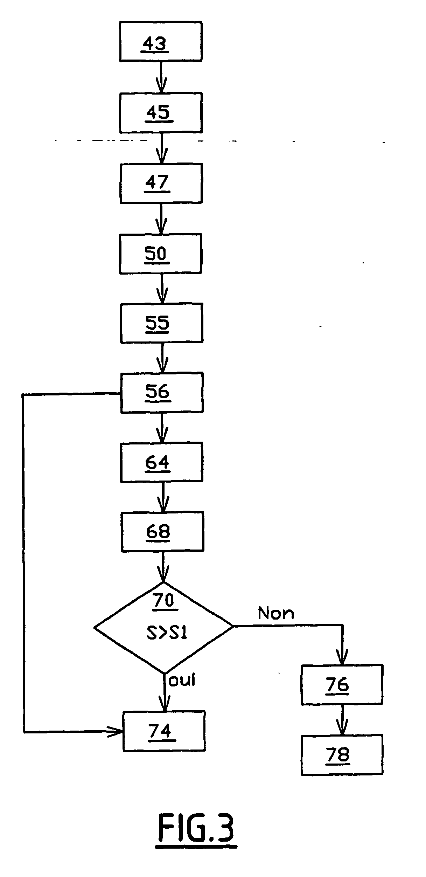

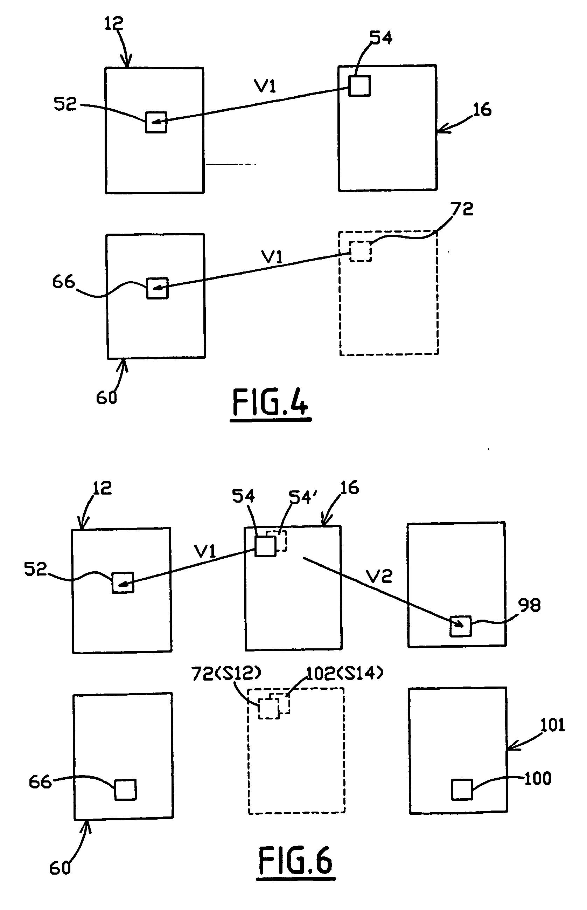

En référence aux figures 3 et 4, le procédé de codage d'une portion d'image 54 de l'image intermédiaire 16 selon une prédiction monodirectionnelle, débute par une étape 43 d'estimation de mouvement des images clé effectuée par l'unité 19, une étape 45 de décision de codage effectuée par l'unité 20 et de codage des images clé effectuée par l'unité 22 et une étape 47 de calcul des cartes de saillance des images clé effectuée par l'unité 24.

Le procédé de codage de la portion d'image 54 se poursuit par une étape 50 d'estimation des partitionnements de l'image intermédiaire 16 et des vecteurs de mouvement existant entre cette image intermédiaire 16 et l'image clé 12 de référence.

Cette étape est réalisée par l'unité d'estimation 19 qui calcule ces informations de partitionnements et de mouvement pour chaque portion d'image des images intermédiaires 16.

Par exemple, en référence à la figure 4, l'unité d'estimation 19 estime qu'il existe un vecteur de mouvement V1 entre la portion 54 de l'image intermédiaire 16 et la portion 52 de l'image clé 12. En particulier, le vecteur de mouvement V1 part de la portion d'image 54 et pointe sur la portion d'image 52.

Au cours d'une étape 55, l'unité de décision 25 détermine le mode de codage de la portion d'image 54 de l'image intermédiaire.

Au cours d'une étape 56, l'unité de codage 26 code les décisions de codage relatives aux modes de codage, incluant les partitionnements et les vecteurs de mouvement.

Lorsque le mode de codage codé par l'unité 26 est de type intra, le processus se poursuit directement par l'étape 74 de codage des informations résiduelles.

Au cours d'une étape 64, l'unité de compensation 28 effectue une compensation de la carte de saillance 60 avec les données de mouvement résultant de l'étape 50. Cela consiste à déterminer une portion 66 de la carte de saillance 60 de telle sorte que la portion 66 soit positionnée au même emplacement dans la carte de saillance 60 que la portion 52 dans l'image clé 12, puis à interpoler de cette portion 66 une portion 72 en prenant en compte la précision sous-pixellique du vecteur de mouvement.

L'étape 68 détermine le niveau de saillance S de la portion 72 de la carte de saillance compensée en mouvement. L'information de saillance constitue une information non binaire variant typiquement de 0 à 255, calculée en chaque pixel.

Le niveau de saillance déterminé est le niveau de saillance moyen de la portion d'image 72. En variante, le niveau de saillance médian ou le niveau de saillance maximum de la portion 72 de carte de saillance est déterminé.

Au cours d'une étape 70, l'unité de sélection 30 compare un niveau de saillance prédéfini S1 au niveau de saillance S de la portion 72 de carte de saillance compensée en mouvement.

Lorsque le niveau de saillance S de la portion 72 est supérieur au niveau de saillance prédéfini S1, la portion d'image 54 est codée au cours d'une étape 74 par la première méthode de codage. Seules les informations qui n'ont pas encore été codées lors de l'étape de codage précédente 56 (telles les résidus de prédiction) sont codées. Au contraire, les vecteurs de mouvement déterminés au cours de l'étape 50 ne sont par exemple pas codés.

Lorsque le niveau de saillance S de la portion 72 de carte de saillance compensée en mouvement est inférieur au niveau de saillance prédéfini S1, le procédé de codage se poursuit par une étape 76 au cours de laquelle l'unité d'estimation 19 calcule des vecteurs de mouvement plus précis, par exemple des vecteurs de mouvement dont l'amplitude des composantes présente une précision supérieure au ¼ de pixel et est, par exemple, égale au 1/16 de pixel.

Puis, au cours d'une étape 78, la portion d'image 54 est codée par l'unité de codage 32 par la deuxième méthode de codage.

Lorsque la portion de carte de saillance 72 offre une saillance de niveau haut, la première méthode de codage reproduit au mieux le signal d'origine par codage selon l'étape 74. Si par contre, la portion de carte de saillance 72 offre une saillance de niveau bas, la deuxième méthode de codage permet d'obtenir une image ayant un rendu visuel de qualité bien qu'elle ne reproduise pas exactement l'image codée.

En référence aux figures 3 et 6, le procédé de codage selon l'invention est décrit dans le cas d'un codage de prédiction bidirectionnelle d'une portion d'image d'une image intermédiaire 16.

Après mise en oeuvre des étapes 43 à 47, l'unité d'estimation 19 estime au cours de l'étape 50 un premier vecteur de mouvement V1 qui part de la portion d'image 54 de l'image intermédiaire 16 et pointe vers une portion d'image 52 de l'image clé 12 et d'un deuxième vecteur de mouvement V2 qui part de la portion d'image 54 et pointe vers une portion d'image 98 de l'image clé 14.

Au cours d'une étape 55, l'unité de décision 25 détermine le mode de codage de la portion d'image 54 de l'image intermédiaire.

Au cours d'une étape 56, l'unité de codage 26 code les décisions de codage relatives aux modes de codage, incluant les partitionnements et les vecteurs de mouvement.

Au cours de l'étape 64, l'unité de compensation 28 détermine une première portion de carte de saillance 66 qui est positionnée au même emplacement que la portion d'image 52, et une deuxième portion de carte de saillance 100 positionnée au même emplacement que la portion d'image 98.

La portion 66 est contenue dans la carte de saillance 60 de l'image clé 12 et la portion 100 est contenue dans une carte de saillance 101 de l'image clé 14.

Au cours de l'étape 64, la portion d'image 66 est compensée en mouvement à l'aide du premier vecteur de mouvement V1 pour obtenir une portion 72 de carte de saillance compensée en mouvement. De même, la portion de carte de saillance 100 est compensée en mouvement à l'aide du deuxième vecteur de mouvement V2 pour obtenir une deuxième portion 102 de carte de saillance compensée en mouvement.

Dans l'étape 68 l'unité de compensation 28 détermine le niveau de saillance S12 de la portion 72 de carte de saillance compensée en mouvement, ainsi que le niveau S14 de la portion 102 de carte de saillance compensée en mouvement.

Puis, l'unité 28 recherche le niveau de saillance maximum entre le niveau de saillance S12 de la portion de carte de saillance 72 et le niveau de saillance S14 de la portion de carte de saillance 102. Ce niveau de saillance maximum est comparé au cours de l'étape 70 au niveau de saillance prédéfini S1 pour sélectionner la méthode de codage.

En variante, le niveau de saillance moyen des niveaux S12, S14 est considéré pour l'étape de comparaison.

La portion d'image de l'image intermédiaire 16 est ensuite codée au cours des étapes 74 et 78 à partir de la première 12 et de la deuxième 14 images clé par une somme pondérée des portions d'image 52 et 98, ladite pondération étant fonction des niveaux de saillance S12, S14 des portions 66 et 100 de carte de saillance.

Par exemple l'équation suivante peut être appliquée :

si S12 $\neq$ 0 ou S14 $\neq$ 0 alors
pred[x,y] = pred0[x,y]*S12/(S12+S14) + pred1[x,y]*S14/(S12+S14),
sinon
pred[x,y] = pred0[x,y]/2 + pred1[x,y]/2

où (x,y) désigne les coordonnées d'un pixel dans la portion d'image prédite (c'est-à-dire dans l'image intermédiaire 16), pred0[] et pred1[] constituent les portions de prédiction des portions 52 et 98, S12 et S14 représentent les niveaux de saillance des portions 52 et 98.

En variante, une pondération supplémentaire W0 est appliquée à la portion de prédiction de la portion 52 et une pondération supplémentaire W1 est appliquée à la portion de prédiction de la portion 98 avec W0+W1 = A1. Ces pondérations W0, W1 sont par exemple fonction de la distance entre l'image clé 12 et l'image intermédiaire 16, ainsi que de la distance entre l'image intermédiaire 16 et l'image clé 14. Cette distance représente le nombre d'images intercalé entre ces images. Dans ce cas, l'équation précédente devient :

si S12$\neq$0 ou S14$\neq$0
pred[x,y] = pred0[x,y]*S12*W01(S12*W0+S14*W1) +
pred1[x,y]*S14*W1/(S12*W0+S14*W1)
sinon,
pred[x,y] = pred0[x,y]*W0 + pred1[x,y]*W1

Les niveaux de saillance S12 et S14 sont définis pour chaque portion d'image. En variante, le niveau de saillance en chaque pixel de chaque portion d'image peut être considéré pour coder et décoder les portions d'image de chaque image intermédiaire.

Selon un autre aspect de l'invention, les images intermédiaires peuvent dans certains cas servir de référence pour le codage d'autres images intermédiaires.

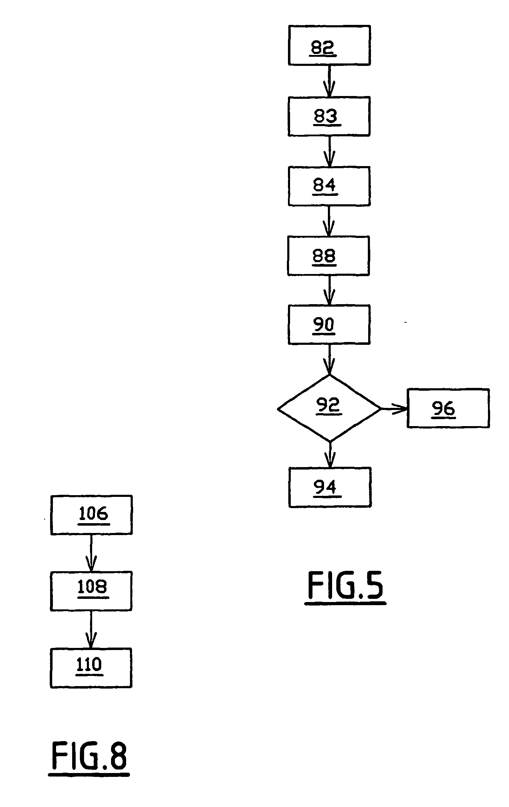

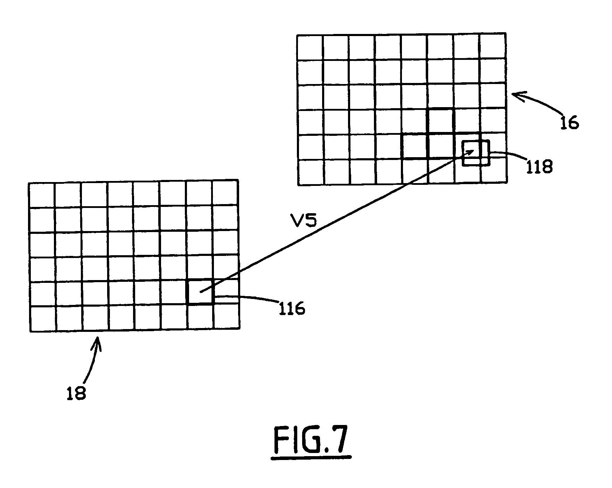

Dans ce cas et en référence aux figures 7 et 8, le procédé de codage de la portion d'image 116 d'une image intermédiaire 18 est considéré.

Dans une première étape 106, l'unité d'estimation 19 estime un vecteur de mouvement V5 qui part de la portion d'image 116 de la deuxième image intermédiaire 18 et pointe vers une portion d'image 118 de la première image intermédiaire 16.

A cours d'une étape 108, le nombre N1 de pixels codés selon la première méthode est dénombré dans la portion d'image 118 de la première image intermédiaire 16

Au cours d'une étape 110, le nombre N1 de pixels codés selon la première méthode est comparé à un seuil Nmin. Si N1 est supérieur à Nmin, la première méthode de codage est sélectionnée pour le codage de la portion d'image 116. Sinon le vecteur de mouvement n'est pas considéré comme valide et ne peut pas être utilisé pour la prédiction et le codage de la portion d'image 116 à partir de l'image intermédiaire 16.

Le codeur (et donc le décodeur) ne peut utiliser la prédiction vers une image intermédiaire que si la portion d'image de l'image intermédiaire vers laquelle pointe le vecteur de mouvement contient suffisamment de pixels codés selon la première méthode. Dans ce cas, la première méthode de codage peut s'appliquer soit en mode mono-directionnel, soit en mode bi-directionnel (un autre prédicteur issu d'une autre image clé ou intermédiaire devant alors être utilisé).

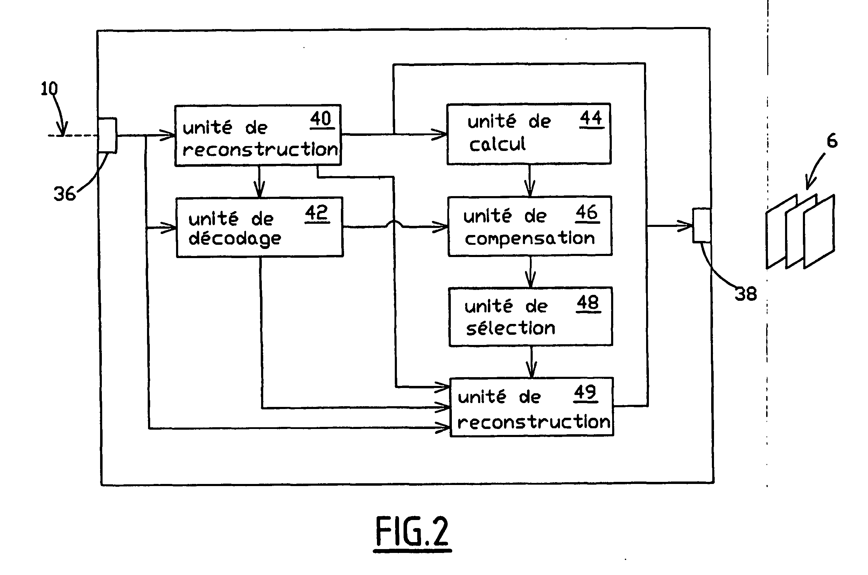

En référence à la figure 2, le décodeur 34 selon l'invention comprend une entrée 36 propre à recevoir le flux binaire 10, par exemple codé par le codeur 2, et une sortie 38 propre à générer un groupe d'images comprenant par exemple deux images clé 12, 14 et des images intermédiaires 16, 18.

Le décodeur 34 comprend une unité 40 de décodage des données compressées représentant les images clé 12, 14 et une unité 42 de décodage des données compressées représentant les données de mouvement (partitionnements, vecteurs, images de référence) des images intermédiaires. L'unité 40 de décodage est reliée à l'entrée 36 et à la sortie 38. L'unité de décodage 42 est reliée à l'entrée 36 et à l'unité de décodage 40.

Le décodeur 34 comprend en outre une unité 44 de calcul des cartes de saillance des images clé décodées 12, 14 et une unité 46 de compensation en mouvement des portions de carte de saillance des images clé pour déterminer le niveau de saillance des portions d'image des images intermédiaires.

L'unité de calcul 44 est reliée à l'unité de décodage 40. L'unité de compensation 46 est reliée à l'unité de calcul 44 et à l'unité de décodage 42.

Le décodeur 34 comprend en outre une unité de sélection 48 de la méthode de décodage des portions d'image des images intermédiaires reliée à l'unité de compensation 46, et une unité de reconstruction 49 des images intermédiaires reliée à l'entrée 36, à l'unité de sélection 48 et à la sortie 38.

L'unité de sélection 48 est apte à analyser pour les portions d'image des images intermédiaires les niveaux de saillance S des portions de carte de saillance compensées en mouvement et à sélectionner une méthode de décodage de ces portions d'image des images intermédiaires en fonction de ces niveaux de saillance.

L'unité de reconstruction 49 est apte à décoder les images intermédiaires 16, 18 selon une méthode sélectionnée parmi au moins une première et une deuxième méthodes de décodage.

Ces méthodes de décodage correspondent bien évidemment aux processus inverses des méthodes de codage utilisées dans le codeur 2, à savoir soit des méthodes de décodage basées sur la norme H.264 soit des méthodes de décodage basées sur la norme SVC.

Alternativement, d'autres méthodes de décodage sont utilisées.

En référence à la figure 5, le procédé de décodage d'une portion d'image 54 de l'image intermédiaire 16 par prédiction monodirectionnelle débute par une étape 82 de reconstruction des images clé, et une étape 83 de calcul des cartes de saillance des images clé.

Le procédé de décodage de la portion d'image 54 se poursuit par une étape 84 au cours de laquelle l'unité de décodage 42 décode le mode de codage et les informations de partitionnements de la portion d'images ainsi que les vecteurs de mouvement définis entre les images intermédiaires 16, 18 et les images clé 12, 14.

Au cours d'une étape 88, l'unité de compensation 46 détermine la portion de carte de saillance 66 positionnée au même emplacement que la portion 52 d'image clé vers laquelle pointe le vecteur de mouvement V1, comme visible sur la figure 4 et interpole de cette portion 66 une portion 72 en prenant en compte la précision sous-pixellique du vecteur de mouvement

L'étape 90 détermine le niveau de saillance S de la portion 72 de carte de saillance compensée en mouvement.

Au cours d'une étape 92, l'unité de sélection 48 compare le niveau de saillance prédéfini S1 au niveau de saillance S de la portion 72 de carte de saillance compensée en mouvement.

Lorsque le niveau de saillance S de la portion 72 est supérieur au niveau de saillance prédéfini S1, l'unité de sélection 48 sélectionne la première méthode de décodage pour reconstruire la portion d'image 54.

Cette première méthode de décodage correspond à la première méthode de codage utilisée lors de l'étape 74.

La portion d'image 54 est reconstruite à l'aide de la première méthode de décodage au cours d'une étape 94.

Lorsque le niveau de saillance S de la portion 72 est inférieur au niveau de saillance prédéfini S1, la portion d'image 54 est décodée au cours d'une étape 96 selon une deuxième méthode de décodage correspondant à la deuxième méthode de codage utilisé au cours de l'étape 78.

En référence à la figure 5, lors de la reconstruction d'une portion d'image d'une image intermédiaire codée selon un schéma de prédiction bidirectionnelle, les étapes 82 à 88 sont mises en oeuvre pour le premier V1 et le deuxième V2 vecteurs de mouvement.

Puis, au cours d'une étape 90, l'unité de compensation 28 détermine un niveau de saillance S12 de la portion 72 de carte de saillance compensée en mouvement à l'aide du premier vecteur de mouvement V1 et un niveau de saillance S14 de la portion 102 de carte de saillance compensée en mouvement à l'aide du deuxième vecteur de mouvement V2.

Puis, le niveau de saillance maximum est recherché entre le niveau de saillance S12 et le niveau de saillance S14. Ce niveau de saillance est comparé au cours de l'étape 92 au niveau de saillance prédéfini S1 pour sélectionner la méthode de décodage de l'image intermédiaire 16.

Une première portion d'image 54 de prédiction et une deuxième portion 54' d'image de prédiction sont reconstruites, puis une portion d'image est calculée à partir de la moyenne pondérée des première 54 et deuxième 54' portions d'image prédites en utilisant les niveaux de saillance et/ou les distances.

Parallèlement, au cours de la reconstruction d'une image intermédiaire ainsi codée, le procédé de décodage comporte les étapes suivantes :

- décoder un vecteur de mouvement partant d'une portion 116 d'une deuxième image intermédiaire 18 et pointant vers au moins une partie d'une portion 118 d'une première image intermédiaire 16 décodée;
- reconstruire la portion 116 de la deuxième image intermédiaire 18 à l'aide de la portion de la première image intermédiaire par la première méthode de codage.

En variante, le procédé de codage et de décodage peut comporter plusieurs niveaux de saillance prédéfinis S1, S2, S3 et plusieurs méthodes de codage présentant par exemple des résolutions de vecteur mouvement différentes.

**Revendications**

**1.** Procédé de codage d'une portion d'image (54) d'une image (12, 14, 16, 18) d'une séquence vidéo (6), au moins une image de la séquence vidéo (6) étant une image clé (12, 14), **caractérisé en ce que** le procédé comprend les étapes suivantes :

a) calculer (47) une carte de saillance (60, 101) de la ou de chaque image clé (12, 14) ;
b) estimer (50) pour la portion d'image à coder (54), au moins un vecteur de mouvement (V1, V2) pointant vers une portion (52, 98) de la ou de chaque image clé (12, 14) ;
c) compenser (64) en mouvement au moins une portion (66, 100) de carte de saillance à l'aide du ou de chaque vecteur de mouvement estimé (V1, V2) pour obtenir, pour ladite portion d'image (54), au moins une portion (72, 102) de carte de saillance prédite ; et
d) coder (68, 70, 74, 76, 78) la portion d'image (54) en fonction du niveau de saillance de la ou chaque portion de carte de saillance prédite (72, 102), procédé dans lequel l'étape d) comprend les étapes suivantes :

- déterminer (68) le niveau de saillance de la ou chaque portion (72, 102) de carte de saillance prédite ;
- comparer (70) un niveau de saillance prédéfini (S1) et le niveau de saillance (S) de la portion (72, 102) de carte de saillance prédite ; et
- coder (74, 76, 78) la portion d'image (54) à l'aide d'une première méthode de codage quand ledit niveau de saillance (S) de ladite portion est supérieur audit niveau de saillance prédéfini (S1) et par une seconde méthode de codage quand ledit niveau de saillance (S) de ladite portion est inférieur audit niveau de saillance prédéfini (S1), ladite première méthode étant une méthode de codage avec une compensation de mouvement et un codage de résidu et ladite seconde méthode étant une méthode de codage avec une compensation de mouvement plus précise que la compensation de mouvement de ladite première méthode et sans codage de résidu.

**2.** Procédé de codage selon la revendication 1, dans lequel la première méthode de codage est définie par la norme H.264, la deuxième méthode de codage étant une méthode basée sur la norme H.264 dans laquelle l'amplitude des composantes de chaque vecteur de mouvement (V1, V2) est supérieure au ¼ de pixel.

**3.** Procédé de codage selon l'une quelconque des revendications 1 et 2, dans lequel la deuxième méthode de codage comprend une interpolation de mouvement basée sur un filtre d'interpolation différent du filtre utilisé dans la première méthode, et une étape de codage et de transmission d'informations de mouvement définies par des paramètres affines.

**4.** Procédé de codage selon l'une quelconque des revendications 1 et 2, dans lequel la portion d'image (54) d'une image (16,18) de la séquence vidéo (6) est codée selon une méthode de compression scalable par couches, les images clé (12, 14) étant destinées à être codées dans une couche de base, la portion d'image (54) étant codée dans une couche haute.

**5.** Procédé de codage selon l'une quelconque des revendications 1 à 4, qui comprend les étapes suivantes :

- estimer (50) un vecteur de mouvement (V5) partant d'une portion (116) d'une deuxième image intermédiaire (18) et pointant vers au moins une partie d'une portion (118) d'une première image intermédiaire (16) ;
- compter le nombre de pixels de la partie de la portion (118) de la première image intermédiaire (16) ;

lorsque le nombre de pixel compté est supérieur à un nombre prédéfini (Nmin),

- coder la portion (116) de la deuxième image intermédiaire (18) à l'aide de la portion (118) de la première image intermédiaire (16) et par la méthode sélectionnée pour coder la portion (118) de la première image intermédiaire (16).

**6.** Procédé de codage selon l'une quelconque des revendications 1 à 4, dans lequel lors d'un codage bidirectionnel d'une portion d'image intermédiaire (54) à partir d'une portion (52) de la première image clé (12) et d'une portion (58) de la deuxième image clé (14), le niveau de saillance (S) comparé au niveau de saillance prédéfini (S1) étant fonction du niveau de saillance (S12) d'une première portion (72) de carte de saillance prédite à partir d'un premier vecteur de mouvement (V1), et du niveau de saillance (S14) d'une deuxième portion (102) de carte de saillance prédite à partir d'un deuxième vecteur de mouvement (V2) ; ladite portion d'image intermédiaire (54) étant codée à partir d'une moyenne des prédictions de la portion (52) de la première image clé (12) et de la portion (58) de la deuxième image clé (14), ladite moyenne étant pondérée par lesdits niveaux de saillance (S12, S14) de la première (72) et de la deuxième (102) portions de carte de saillance prédites.

**7.** Procédé de codage selon l'une quelconque des revendications précédentes, dans lequel l'étape a) comprend une étape de codage de la ou chaque image clé (12, 14), ladite étape générant des images clé reconstruites ; la carte de saillance (60, 101) étant calculée de la ou de chaque image clé reconstruite (12, 14).

**8.** Procédé de décodage d'un flux binaire (10) comprenant des données compressées représentatives de vecteurs de mouvement (V1, V2), d'images (16, 18) et d'images clé (12, 14) d'une séquence vidéo (6) en vue de la reconstruction d'une portion d'image à reconstruire (54), **caractérisé en ce que** le procédé comprend les étapes suivantes :

a) reconstruire (82) la ou chaque image clé (12, 14) à partir des données compressées :
b) calculer (83) une carte de salliance (60, 101) de la ou de chaque Image clé (12, 14) reconstruite ;
c) décoder (84) au moins un vecteur de mouvement (V1, V2) pour la portion d'image à reconstruire (54) pointant vers une portion (52, 98) de l'image clé (12,14) ;
d) compenser en mouvement (88) au moins une portion de carte de saillance (66, 100) à l'aide du vecteur de mouvement décodé (V1. V2) pour obtenir pour ladite portion d'image à reconstruire (54), une portion de carte de saillance prédite (72, 102) ; et
e) reconstruire (90, 92, 94, 96) la portion d'image à reconstruire (54) en fonction du niveau de saillance de la portion de carte de salliance prédite (72, 102),

procédé dans lequel l'étape e) comprend les étapes suivantes :

- déterminer (90) le niveau de saillance de la ou chaque portion de carte de saillance prédite (72, 102) ;
- comparer (92) un niveau de saillance prédéfini (S1) et le niveau de saillance (S) de la portion de carte de saillance prédite (72, 102) ; et
- reconstruire (94, 96) la portion d'image à reconstruire (54) à l'aide d'une première méthode de décodage quand ledit niveau de saillance (S) de ladite portion est supérieur audit niveau de saillance prédéfini (S1) et par une seconde méthode de décodage quand ledit niveau de saillance (S) de ladite portion est inférieur audit niveau de saillance prédéfini (S1), ladite première méthode étant une méthode de décodage avec une compensation de mouvement et un décodage de résidu et ladite seconde méthode étant une méthode de décodage avec une compensation de mouvement plus précise que la compensation de mouvement de ladite première méthode et sans décodage de résidu.

**9.** Procédé de décodage selon la revendication 8, dans lequel la portion d'image (54) d'une image (16, 18) de la séquence vidéo (6) est décodée selon une méthode de compression scalable par couches, la reconstruction de données compressées d'une couche de base générant les images clé (12, 14), la reconstruction de données compressées d'une couche haute générant la portion d'image à reconstruire (54).

**10.** Procédé de décodage selon la revendication 8, qui comporte les étapes suivantes :

- décoder au moins un vecteur de mouvement (V1, V2) partant d'une portion (116) d'une deuxième image intermédiaire (18) et pointant vers au moins une partie d'une portion (118) d'une première image intermédiaire décodée (16); le procédé comportant en outre les étapes suivantes :
- compter le nombre de pixels de la partie de la portion (118) de la première image intermédiaire décodée (16) ;

lorsque le nombre de pixel compté est supérieur à un nombre prédéfini (Nmin),

- reconstruire la portion (116) de la deuxième image intermédiaire (18) à l'aide de la portion (118) de la première image intermédiaire (16) et par la méthode sélectionnée pour reconstruire la portion (118) de la première image intermédiaire (16).

**11.** Procédé de décodage selon la revendication 8, dans lequel lors d'une reconstruction d'une portion d'image intermédiaire (54) codée selon une prédiction bidirectionnelle à partir d'une portion (52) de la première image clé (12) et d'une portion (58) de la deuxième image clé (14), le niveau de saillance (S) comparé au niveau de saillance prédéfini (S1) est fonction du niveau de saillance (S12) d'une première portion (72) de carte de saillance prédite à partir d'un premier vecteur de mouvement (V1), et du niveau de saillance (S14) d'une deuxième portion (102) de carte de saillance prédite à partir d'un deuxième vecteur de mouvement (V2) ; ladite portion d'image intermédiaire (54) étant reconstruite à partir d'une moyenne des prédictions de la portion (52) de la première image clé (12) et de la portion (58) de la deuxième image clé (14), ladite moyenne étant pondérée par lesdits niveaux de saillance (S12, S14) de la première (72) et de la deuxième (100) portions de carte de saillance prédites.

**12.** Codeur (2) apte à coder des images (12, 14, 16, 18) d'une séquence vidéo (6), au moins une image étant une image clé (12, 14), **caractérisé en ce que** le codeur (2) comprend :

- une unité de calcul (24) d'une carte de saillance (60, 101) de la ou de chaque image clé (12, 14) ;
- une unité d'estimation (19) apte à estimer pour la portion d'image à coder (54) au moins un vecteur de mouvement (V1, V2) pointant vers une portion (52, 98) de la ou de chaque image clé (12, 14) ;
- une unité de compensation (28) apte à compenser en mouvement la ou chaque portion de carte de saillance (66, 100) à l'aide du ou de chaque vecteur de mouvement estimé (V1, V2) pour obtenir, pour ladite portion d'image (54), au moins une portion (72, 102) de carte de saillance prédite ; et
- une unité de codage (32) apte à coder la portion d'image (54) en fonction du niveau de saillance de la ou chaque portion de carte de saillance prédite (72, 102), ladite unité de codage (32) comprenant :

- une unité pour déterminer le niveau de saillance de la ou chaque portion de carte de saillance prédite ;
- une unité pour comparer un niveau de saillance prédéfini (S1) et le niveau de saillance (S) de la portion de carte de saillance prédite ; et
- une unité pour coder la portion d'image à l'aide d'une première méthode de codage quand ledit niveau de saillance (S) de ladite portion est supérieur audit niveau de saillance prédéfini (S1) et par une seconde méthode de codage quand ledit niveau de saillance (S) de ladite portion est inférieur audit niveau de saillance prédéfini (S1), ladite première méthode étant une méthode de codage avec une compensation de mouvement et un codage de résidu et ladite seconde méthode étant une méthode de codage avec une compensation de mouvement plus précise que la compensation de mouvement de ladite première méthode et sans codage de résidu.

**13.** Décodeur (34) d'un flux binaire (10) comprenant des données compressées représentatives de vecteurs de mouvement (V1, V2), d'images (16, 18) et d'images clé (12, 14) d'une séquence vidéo (6) en vue de la reconstruction d'une portion d'image à reconstruire (54), le décodeur (34) comprenant :

- une unité de reconstruction (40) de la ou de chaque image clé (12, 14) à partir des données compressées ;
- une unité de calcul (44) de carte de saillance (60, 101) de la ou de chaque image clé reconstruite (12, 14) ;
- une unité de décodage (42) apte à décoder au moins un vecteur de mouvement (V1, V2) pour la portion d'image à reconstruire (54) pointant vers une portion (52, 98) de la ou chaque image clé (12, 14) ;
- une unité (46) de compensation en mouvement apte à compenser en mouvement au moins une portion de carte de saillance (66, 100) à l'aide du vecteur de mouvement décodé (V1, V2) pour obtenir, pour ladite portion d'image à reconstruire, une portion de carte de saillance prédite (72, 102) ; et
- une unité de reconstruction (49) apte à reconstruire la portion d'image à reconstruire (54) en fonction du niveau de saillance de la portion de carte de saillance prédite (72, 102), ladite unité de reconstruction (49) comprenant :

- une unité pour déterminer le niveau de saillance de la ou chaque portion de carte de saillance prédite ;
- une unité pour comparer un niveau de saillance prédéfini (S1) et le niveau de saillance (S) de la portion de carte de saillance prédite; et
- une unité pour reconstruire le portion d'image à reconstruire à l'aide d'une première méthode de décodage quand ledit niveau de saillance (S) de ladite portion est supérieur audit niveau de saillance prédéfini (S1) et par une seconde méthode de décodage quand ledit niveau de saillance (S) de ladite portion est inférieur audit niveau de saillance prédéfini (S1), ladite première méthode étant une méthode de décodage avec une compensation de mouvement et un décodage de résidu et ladite seconde méthode étant une méthode de décodage avec une compensation de mouvement plus précise que la compensation de mouvement de ladite première méthode et sans décodage de résidu.

**Claims**

**1.** Method of coding of a picture portion (54) of a picture (12, 14, 16, 18) of a video sequence (6), at least one picture of the video sequence (6) being a key picture (12, 14), **characterised in that** the method comprises the following steps:

a) calculating (47) a saliency map (60, 101) of the key picture or of each key picture (12, 14);

b) estimating (50) for the picture portion to be coded (54), at least one motion vector (V1, V2) pointing to a portion (52, 98) of the key picture or of each key picture (12, 14);

c) compensating (64) in motion at least one portion (66, 100) of saliency map using the estimated motion vector or each estimated motion vector (V1, V2) to obtain, for said picture portion (54), at least one portion (72, 102) of predicted saliency map; and

d) coding (68, 70, 74, 76, 78) the picture portion (54) depending on the saliency level of the portion or of each portion of predicted saliency map (72, 102), method wherein step d) comprises the following steps:

- determining (68) the saliency level of the portion or each portion (72, 102) of predicted saliency map;

- comparing (70) a predefined saliency level (S1) and saliency level (S) of the portion (72, 102) of predicted saliency map; and

- coding (74, 76, 78) the picture portion (54) using a first method of coding when said saliency level (S) of said portion is greater than said predefined saliency level (S1) and by a second method of coding when said saliency level (S) of said portion is less than said predefined saliency level (S1), said first method being a method of coding with a motion compensation and residue coding and said second method being a method of coding with a motion compensation more accurate than the motion compensation of said first method and without residue coding.

2. Method of coding according to claim 1, wherein the first method of coding is defined by the H.264 standard, the second method of coding being a method based on the H.264 standard wherein the amplitude of the components of each motion vector (V1, V2) is greater than 1/4 pixel.

3. Method of coding according to any one of claims 1 and 2, wherein the second method of coding comprises a motion interpolation based on an interpolation filter different from the filter used in the first method, and a step of coding and transmission of motion information defined by affine parameters.

4. Method of coding according to any one of claims 1 and 2, wherein the picture portion (54) of a picture (16, 18) of the video sequence (6) is coded according to a compression method scalable in layers, the key pictures (12, 14) being intended to be coded in a base layer, the picture portion (54) being coded in a high layer.

5. Method of coding according to any one of claims 1 to 4, which comprises the following steps:

- estimating (50) a motion vector (V5) from a portion (116) of a second intermediate picture (18) and pointing to at least one part of a portion (118) of a first intermediate picture (16);

- counting the number of pixels of the part of the portion (118) of the first intermediate picture (16);

when the counted number of pixels is greater than a predefined number (Nmin),

- coding the portion (116) of the second intermediate picture (18) using the portion (118) of the first intermediate picture (16) and by the selected method for coding the portion (118) of the first intermediate picture (16).

6. Method of coding according to any one of claims 1 to 4, wherein during a bidirectional coding of an intermediate picture portion (54) from a portion (52) of the first key picture (12) and a portion (58) of the second key picture (14), the saliency level (S) compared to the predefined saliency level (S1) being a function of the saliency level (S12) of a first portion (72) of predicted saliency map from a first motion vector (V1), and the saliency level (S14) of a second portion (102) of predicted saliency map from a second motion vector (V2); said intermediate picture portion (54) being coded from a mean of predictions of the portion (52) of the first key picture (12) and the portion (58) of the second key picture (14), said mean being weighted by said saliency levels (S12, S14) of the first (72) and the second (102) portions of predicted saliency map.

7. Method of coding according to any one of the preceding claims, wherein step a) comprises a step of coding of the key picture or of each key picture (12, 14), said step generating reconstructed key pictures; the saliency map (60, 101) being calculated from the reconstructed key picture or each reconstructed key picture (12, 14).

8. Method of decoding a binary stream (10) comprising compressed data representative of motion vectors (V1, V2), of pictures (16, 18) and of key pictures (12, 14) of a video sequence (6) for the reconstruction of a picture portion to be reconstructed (54), **characterized in that** the method comprises the following steps:

a) reconstructing (82) the key picture or each key picture (12, 14) from the compressed data;
b) calculating (83) a saliency map (60, 101) of the reconstructed key picture or of each reconstructed key picture (12, 14);
c) decoding (84) at least one motion vector (V1, V2) for the picture portion to be reconstructed (54) pointing to a portion (52, 98) of the key picture (12,14);
d) compensating in motion (88) at least one portion of saliency map (66, 100) using the decoded motion vector (V1, V2) to obtain for said picture portion to be reconstructed (54), a portion of predicted saliency map (72, 102); and
e) reconstructing (90, 92, 94, 96) the picture portion to be reconstructed (54) depending on the saliency level of a portion predicted saliency map (72, 102), method wherein step e) comprises the following steps:

- determining (90) the saliency level of the portion or each portion of predicted saliency map (72, 102);
- comparing (92) a predefined saliency level (S1) and the saliency level (S) of the portion of predicted saliency map (72, 102), and
- reconstructing (94, 96) the picture portion to be reconstructed (54) using a first method of decoding when said saliency level (S) of said portion is greater than said predefined saliency level (S1) and by a second method of decoding when said saliency level (S) of said portion is less than said predefined saliency level (S1), said first method being a method of decoding with a motion compensation and residue decoding and said second method being a method of decoding with a motion compensation more accurate than the motion compensation of said first method of decoding and without residue decoding.

9. Method of decoding according to claim 8, wherein the picture portion (54) of a picture (16, 18) of the video sequence (6) is decoded according to a compression method scalable by layers, the reconstruction of compressed data of a base layer generating the key pictures (12, 14), the reconstruction of compressed data of a high layer generating the picture portion to be reconstructed (54).

10. Method of decoding according to claim 8, which comprises the following steps:

- decoding at least one motion vector (V1, V2) from a portion (116) of a second intermediate picture (18) and pointing to at least one part of a portion (118) of a first decoded intermediate picture (16); the method further comprising the following steps:
- counting the number of pixels of the part of the portion (118) of the first decoded intermediate picture (16);

when the number of pixels counted is greater than a predefined number (Nmin),

- reconstructing the portion (116) of the second intermediate picture (18) using the portion (118) of the first intermediate picture (16) and by the selected method for reconstructing the portion (118) of the first intermediate picture (16).

11. Method of decoding according to claim 8, wherein during a reconstruction of an intermediate picture portion (54) coded according to a bidirectional prediction from a portion (52) of the first key picture (12) and a portion (58) of the second key picture (14), the saliency level (S) compared to the predefined saliency level (S1) is a function of the saliency level (S12) of a first portion (72) of predicted saliency map from a first motion vector (V1), and the saliency level (S14) of a second portion (102) of predicted saliency map from a second motion vector (V2); said intermediate picture portion (54) being reconstructed from a mean of predictions of the portion (52) of the first key picture (12) and the portion (58) of the second key picture (14), said average being weighted by said saliency levels (S12, S14) of the first (72) and the second (100) portions of predicted saliency map.

12. Coder (2) able to code the pictures (12, 14, 16, 18) of a video sequence (6), at least one picture being a key picture (12, 14), **characterised in that** the coder (2) comprises:

- a calculation unit (24) of a saliency map (60, 101) of the key picture or each key picture (12, 14);
- an estimation unit (19) able to estimate for the picture portion to be coded (54) at least one motion vector (V1, V2) pointing to a portion (52, 98) of the key picture or of each key picture (12, 14);
- a compensation unit (28) able to compensate in motion the portion or each portion of saliency map (66, 100) using the estimated motion vector or each estimated motion vector (V1, V2) to obtain, for said picture portion (54), at least one portion (72, 102) of predicted saliency map, and
- a coding unit (32) able to code the picture portion (54) depending on the saliency level of the portion or each portion of predicted saliency map (72, 102), said coding unit (32) comprising:
- a unit for determining the saliency level of the portion or each portion of predicted saliency map;
- a unit for comparing a predefined saliency level (S1) and the saliency level (S) of the portion of predicted saliency map; and
- a unit for coding the picture portion (54) using a first method of decoding when said saliency level (S) of said portion is greater than said predefined saliency level (S1) and by a second method of coding when said saliency level (S) of said portion is less than said predefined saliency level (S1), said first method being a method of coding with a motion compensation and residue coding and said second method being a method of coding with a motion compensation more accurate than the motion compensation of said first method and without residue coding.

13. Decoder (34) of a binary stream (10) comprising compressed data representative of motion vectors (V1, V2), of pictures (16, 18) and of key pictures (12, 14) of a video sequence (6) for the reconstruction of a picture portion to be reconstructed (54), the decoder (34) comprising:

- a reconstruction unit (40) of the key picture or each key picture (12, 14) from the compressed data;
- a calculation unit (44) of saliency map (60, 101) of the key picture or each reconstructed key picture (12, 14);
- a decoding unit (42) able to decode at least one motion vector (V1, V2) for the picture portion to be reconstructed (54) pointing to a portion (52, 98) of the key picture or of each key picture (12, 14);
- a motion compensation unit (46) able to compensate in motion at least one portion of saliency map (66, 100) using the decoded motion vector (V1, V2) to obtain, for said picture portion to be reconstructed, a portion of predicted saliency map (72, 102); and
- a reconstruction unit (49) able to reconstruct the picture portion to be reconstructed (54) depending on the saliency level of the portion of predicted saliency map (72, 102), said reconstruction unit (49) comprising:
- a unit for determining the saliency level of the portion or each portion of predicted saliency map;
- a unit for comparing a predefined saliency level (S1) and the saliency level (S) of the portion of predicted saliency map; and
- a unit for reconstructing the picture portion to be reconstructed using a first method of decoding when said saliency level (S) of said portion is greater than said predefined saliency level (S1) and by a second method of decoding when said saliency level (S) of said portion is less than said predefined saliency level (S1), said first method being a method of decoding with a motion compensation and residue decoding and said second method being a method of decoding with a motion compensation more accurate than the motion compensation of said first method of decoding and without residue decoding.

**Patentansprüche**

1. Verfahren für die Codierung eines Bildabschnitts (54) eines Bildes (12, 14, 16, 18) einer Videosequenz (6), wobei mindestens ein Bild der Videosequenz (6) ein Schlüsselbild (12, 14) ist, **dadurch gekennzeichnet, dass** das Verfahren die folgenden Schritte umfasst:

a) Berechnung (47) einer Salienzkarte (60, 101) des bzw. jedes Schlüsselbildes (12, 14);
b) Schätzung (50) für den zu codierenden Bildabschnitt (54) mindestens eines Bewegungsvektors (V1, V2), der auf einen Abschnitt (52, 98) des bzw. jedes Schlüsselbildes (12, 14) zeigt;
c) Bewegungskompensation (64) mindestens eines Abschnitts (66, 100) einer Salienzkarte mit Hilfe des bzw. jedes geschätzten Bewegungsvektors (V1, V2), um für den Bildabschnitt (54) mindestens einen prädizierten Salienzkartenabschnitt (72, 102) zu erhalten, und
d) Codierung (68, 70, 74, 76, 78) des Bildabschnitts (54) in Abhängigkeit von dem Salience Level des bzw. jedes prädizierten Salienzkartenabschnitts (72, 102),

bei dem der Schritt d) die folgenden Schritte umfasst:

- Bestimmung (68) des Salience Levels des bzw. jedes prädizierten Salienzkartenabschnitts (72, 102),
- Vergleich (70) eines vorgegebenen Salience Levels (S1) mit dem Salience Level (S) des prädizierten Salienzkartenabschnitts (72, 102), und

- Codierung (74, 76, 78) des Bildabschnitts (54) mit Hilfe einer ersten Codierungsmethode, wenn der Salience Level (S) des Abschnitts höher ist als der vorgegebene Salience Level (S1) und mit einer zweiten Codierungsmethode, wenn der Salience Level (S) des Abschnitts niedriger ist als der vorgegebene Salience Level (S1), wobei die erste Methode eine Codierungsmethode mit Bewegungskompensation und einer Residuumscodierung ist und die zweite Methode eine Codierungsmethode mit einer genaueren Bewegungskompensation als die Bewegungskompensation der ersten Methode und ohne Residuumscodierung ist.

2. Codierungsverfahren nach Anspruch 1, bei dem die erste Codierungsmethode durch den Standard H.264 definiert ist, wobei die zweite Codierungsmethode eine auf dem Standard H.264 basierte Methode ist, bei der die Amplitude der Komponenten jedes Bewegungsvektors (V1, V2) größer als ¼ Pixel ist.

3. Codierungsverfahren nach einem beliebigen der Ansprüche 1 und 2, bei dem die zweite Codierungsmethode eine Bewegungsinterpolation, die auf einem Interpolationsfilter basiert, das sich von dem bei der ersten Methode verwendeten Filter unterscheidet, und einen Schritt der Codierung und der Übertragung von Bewegungsinformationen, die durch affine Parameter definiert werden, umfasst.

4. Codierungsverfahren nach einem beliebigen der Ansprüche 1 und 2, bei dem der Bildabschnitt (54) eines Bildes (16, 18) der Videosequenz (6) gemäß einer Methode der schichtweise skalierbaren Komprimierung codiert wird, wobei die Schlüsselbilder (12, 14) dazu bestimmt sind, in einer Basisschicht codiert zu werden, wobei der Bildabschnitt (54) in einer hohen Schicht codiert wird.

5. Codierungsverfahren nach einem beliebigen der Ansprüche 1 bis 4, umfassend die folgenden Schritte:

   - Schätzung (50) eines Bewegungsvektors (V5), der von einem Abschnitt (116) eines zweiten Zwischenbildes (18) ausgeht und auf mindestens einen Teil eines Abschnitts (118) eines ersten Zwischenbildes (16) zeigt,
   - Zählung der Anzahl von Pixeln in dem Teil des Abschnitts (118) des ersten Zwischenbildes (16),

   wenn die gezählte Anzahl von Pixeln größer ist als eine vorgegebene Anzahl (Nmin),

   - Codierung des Abschnitts (116) des zweiten Zwischenbildes (18) mit Hilfe des Abschnitts (118) des ersten Zwischenbildes (16) und mit der für die Codierung des Abschnitts (118) des ersten Zwischenbildes (16) gewählten Methode.

6. Codierungsverfahren nach einem beliebigen der Ansprüche 1 bis 4, bei dem bei einer bidirektionalen Codierung eines Zwischenbildabschnitts (54) ausgehend von einem Abschnitt (52) des ersten Schlüsselbildes (12) und von einem Abschnitt (58) des zweiten Schlüsselbildes (14) der mit dem vorgegebenen Salience Level (S1) verglichene Salience Level (S) von dem Salience Level (S12) eines ersten, ausgehend von einem ersten Bewegungsvektor (V1) prädizierten Salienzkartenabschnitts (72) und von dem Salience Level (S14) eines zweiten, ausgehend von einem zweiten Bewegungsvektor (V2) prädizierten Salienzkartenabschnitts (102) abhängt, wobei der Zwischenbildabschnitt (54) ausgehend von einem Durchschnitt der Prädiktionen des Abschnitts (52) des ersten Schlüsselbildes (12) und des Abschnitts (58) des zweiten Schlüsselbildes (14) codiert wird, wobei der Durchschnitt durch die Salience Levels (S12, S14) des ersten prädizierten Salienzkartenabschnitts (72) und des zweiten prädizierten Salienzkartenabschnitts (102) gewichtet wird.

7. Codierungsverfahren nach einem beliebigen der vorhergehenden Ansprüche, bei dem der Schritt a) einen Schritt der Codierung des bzw. jedes Schlüsselbildes (12, 14) umfasst, wobei dieser Schritt rekonstruierte Schlüsselbilder erzeugt, wobei die Salienzkarte (60, 101) ausgehend von dem bzw. von jedem rekonstruierten Schlüsselbild (12, 14) berechnet wird.

8. Verfahren zur Decodierung eines Bitstromes (10) mit komprimierten Daten, die für Bewegungsvektoren (V1, V2), Bilder (16, 18) und Schlüsselbilder (12, 14) einer Videosequenz (6) repräsentativ sind, um einen zu rekonstruierenden Bildabschnitt (54) zu rekonstruieren, **dadurch gekennzeichnet, dass** das Verfahren die folgenden Schritte umfasst:

   a) Rekonstruktion (82) des bzw. jedes Schlüsselbildes (12, 14) ausgehend von den komprimierten Daten,
   b) Berechnung (83) einer Salienzkarte (60, 101) des bzw. jedes rekonstruierten Schlüsselbildes (12, 14),
   c) Decodierung (84) mindestens eines Bewegungsvektors (V1, V2) für den zu rekonstruierenden Bildabschnitt (54), der auf einen Abschnitt (52, 98) des Schlüsselbildes (12, 14) zeigt,
   d) Bewegungskompensation (88) mindestens eines Salienzkartenabschnitts (66, 100) mit Hilfe des decodierten Bewegungsvektors (V1, V2), um für den zu rekonstruierenden Bildabschnitt (54) einen prädizierten Salienzkartenabschnitt (72, 102) zu erhalten, und
e) Rekonstruktion (90, 92, 94, 96) des zu rekonstruierenden Bildabschnitts (54) in Abhängigkeit von dem Salience Level des prädizierten Salienzkartenabschnitts (72, 102),

bei dem der Schritt e) die folgenden Schritte umfasst:

- Bestimmung (90) des Salience Levels des bzw. jedes prädizierten Salienzkartenabschnitts (72, 102),
- Vergleich (92) eines vorgegebenen Salience Levels (S1) mit dem Salience Level (S) des prädizierten Salienzkartenabschnitts (72, 102), und
- Rekonstruktion (94, 96) des zu rekonstruierenden Bildabschnitts (54) mit Hilfe einer ersten Decodierungsmethode, wenn der Salience Level (S) des Abschnitts höher ist als der vorgegebene Salience Level (S1) und mit einer zweiten Decodierungsmethode, wenn der Salience Level (S) des Abschnitts niedriger ist als der vorgegebene Salience Level (S1), wobei die erste Methode eine Decodierungsmethode mit Bewegungskompensation und einer Residuumsdecodierung ist und die zweite Methode eine Decodierungsmethode mit einer genaueren Bewegungskompensation als die Bewegungskompensation der ersten Methode und ohne Residuumsdecodierung ist.

9. Decodierungsverfahren nach Anspruch 8, bei dem der Bildabschnitt (54) eines Bildes (16, 18) der Videosequenz (6) gemäß einer Methode der schichtweise skalierbaren Komprimierung decodiert wird, wobei durch die Rekonstruktion von komprimierten Daten einer Basisschicht die Schlüsselbilder (12, 14) erzeugt werden, wobei durch die Rekonstruktion von komprimierten Daten einer hohen Schicht der zu rekonstruierende Bildabschnitt (54) erzeugt wird.

10. Decodierungsverfahren nach Anspruch 8, umfassend die folgenden Schritte:

- Decodierung mindestens eines Bewegungsvektors (V1, V2), der von einem Abschnitt (116) eines zweiten Zwischenbildes (18) ausgeht und auf mindestens einen Teil eines Abschnitts (118) eines ersten decodierten Zwischenbildes (16) zeigt,

wobei das Verfahren ferner die folgenden Schritte umfasst:

- Zählung der Anzahl von Pixeln in dem Teil des Abschnitts (118) des ersten decodierten Zwischenbildes (16),

wenn die gezählte Anzahl von Pixeln größer ist als eine vorgegebene Anzahl (Nmin),

- Rekonstruktion des Abschnitts (116) des zweiten Zwischenbildes (18) mit Hilfe des Abschnitts (118) des ersten Zwischenbildes (16) und mit der für die Rekonstruktion des Abschnitts (118) des ersten Zwischenbildes (16) gewählten Methode.

11. Decodierungsverfahren nach Anspruch 8, bei dem bei einer Rekonstruktion eines Zwischenbildabschnitts (54), der gemäß einer bidirektionalen Prädiktion ausgehend von einem Abschnitt (52) des ersten Schlüsselbildes (12) und einem Abschnitt (58) des zweiten Schlüsselbildes (14) codiert ist, der mit dem vorgegebenen Salience Level (S1) verglichene Salience Level (S) von dem Salience Level (S12) eines ersten, ausgehend von einem ersten Bewegungsvektor (V1) prädizierten Salienzkartenabschnitts (72) und von dem Salience Level (S14) eines zweiten, ausgehend von einem zweiten Bewegungsvektor (V2) prädizierten Salienzkartenabschnitts (102) abhängt, wobei der Zwischenbildabschnitt (54) ausgehend von einem Durchschnitt der Prädiktionen des Abschnitts (52) des ersten Schlüsselbildes (12) und des Abschnitts (58) des zweiten Schlüsselbildes (14) rekonstruiert wird, wobei der Durchschnitt durch die Salience Levels (S12, S14) des ersten prädizierten Salienzkartenabschnitts (72) und des zweiten prädizierten Salienzkartenabschnitts (100) gewichtet wird.

12. Codierer (2), der geeignet ist, Bilder (12, 14, 16, 18) einer Videosequenz (6) zu codieren, wobei mindesteins ein Bild ein Schlüsselbild (12, 14) ist, **dadurch gekennzeichnet, dass** der Codierer (2) Folgendes umfasst:

- eine Einheit (24) für die Berechnung einer Salienzkarte (60, 101) des bzw. jedes Schlüsselbildes (12, 14),
- eine Schätzeinheit (19), die geeignet ist, für den zu codierenden Bildabschnitt (54) mindestens einen Bewegungsvektor (V1, V2) zu schätzen, der auf einen Abschnitt (52, 98) des bzw. jedes Schlüsselbildes (12, 14) zeigt,
- eine Kompensationseinheit (28), die geeignet ist, eine Bewegungskompensation des bzw. jedes Salienzkartenabschnitts (66, 100) mit Hilfe des bzw. jedes geschätzten Bewegungsvektors (V1, V2) durchzuführen, um für den Bildabschnitt (54) mindestens einen prädizierten Salienzkartabschnitt (72, 102) zu erhalten, und
- eine Codierungseinheit (32), die geeignet ist, den Bildabschnitt (54) in Abhängigkeit von dem Salience Level des bzw. jedes prädizierten Salienzkartabschnitts (72, 102) zu codieren, wobei die Codierungseinheit (32) Folgendes umfasst:
- eine Einheit, um den Salience Level des bzw. jedes prädizierten Salienzkartabschnitts zu bestimmen,
- eine Einheit, um einen vorgegebenen Salience Level (S1) mit dem Salience Level (S) des prädizierten Salienzkartabschnitts zu vergleichen, und
- eine Einheit, um den Bildabschnitt mit Hilfe einer ersten Codierungsmethode zu codieren, wenn der Salience Level (S) des Abschnitts höher ist als der vorgegebene Salience Level (S1) und mit einer zweiten Codierungsmethode, wenn der Salience Level (S) des Abschnitts niedriger ist als der vorgegebene Salience Level (S1), wobei die erste Methode eine Codierungsmethode mit Bewegungskompensation und einer Residuumscodierung ist und die zweite Methode eine Codierungsmethode mit einer genaueren Bewegungskompensation als die Bewegungskompensation der ersten Methode und ohne Residuumscodierung ist.

13. Decodierer (34) eines Bitstroms (10) mit komprimierten Daten, die für Bewegungsvektoren (V1, V2), Bilder (16, 18) und Schlüsselbilder (12, 14) einer Videosequenz (6) repräsentativ sind, um einen zu rekonstruierenden Bildabschnitt (54) zu rekonstruieren, wobei der Decodierer (34) Folgendes umfasst:

- eine Einheit (40) für die Rekonstruktion des bzw. jedes Schlüsselbildes (12 ,14) ausgehend von den komprimierten Daten,
- eine Einheit (44) für die Berechnung der Salienzkarte (60, 101) des bzw. jedes rekonstruierten Schlüsselbildes (12, 14),
- eine Decodierungseinheit (42), die geeignet ist, mindestens einen Bewegungsvektor (V1, V2) für den zu rekonstruierenden Bildabschnitt (54) zu decodieren, der auf einen Abschnitt (52, 98) des bzw. jedes Schlüsselbildes (12, 14) zeigt,
- eine Bewegungskompensationseinheit (46), die geeignet ist, eine Bewegungskompensation mindestens eines Salienzkartabschnitts (66, 100) mit Hilfe des decodierten Bewegungsvektors (V1, V2) durchzuführen, um für den zu rekonstruierenden Bildabschnitt einen prädizierten Salienzkartabschnitt (72, 102) zu erhalten, und
- eine Rekonstruktionseinheit (49), die geeignet ist, den zu rekonstruierenden Bildabschnitt (54) in Abhängigkeit von dem Salience Level des prädizierten Salienzkartenabaschnitts (72, 102) zu rekonstruieren, wobei die Rekonstruktionseinheit (49) Folgendes umfasst:
- eine Einheit, um den Salience Level des bzw. jedes prädizierten Salienzkartabschnitts zu bestimmen,
- eine Einheit, um einen vorgegebenen Salience Level (S1) mit dem Salience Level (S) des prädizierten Salienzkartabschnitts zu vergleichen, und
- eine Einheit für die Rekonstruktion des zu rekonstruierenden Bildabschnitts mit Hilfe einer ersten Decodierungsmethode, wenn der Salience Level (S) des Abschnitts höher ist als der vorgegebene Salience Level (S1) und mit einer zweiten Decodierungsmethode, wenn der Salience Level (S) des Abschnitts niedriger ist als der vorgegebene Salience Level (S1), wobei die erste Methode eine Decodierungsmethode mit Bewegungskompensation und einer Residuumsdecodierung ist und die zweite Methode eine Decodierungsmethode mit einer genaueren Bewegungskompensation als die Bewegungskompensation der ersten Methode und ohne Residuumsdecodierung ist.

FIG.1

**FIG.2**

```
        ┌──────────┐
        │    43    │
        └────┬─────┘
             │
             ▼
        ┌──────────┐
        │    45    │
        └────┬─────┘
             │
             ▼
        ┌──────────┐
        │    47    │
        └────┬─────┘
             │
             ▼
        ┌──────────┐
        │    50    │
        └────┬─────┘
             │
             ▼
        ┌──────────┐
        │    55    │
        └────┬─────┘
             │
             ▼
        ┌──────────┐
        │    56    │
        └────┬─────┘
             │
             ▼
        ┌──────────┐
        │    64    │
        └────┬─────┘
             │
             ▼
        ┌──────────┐
        │    68    │
        └────┬─────┘
             │
             ▼
          ╱──────╲
         ╱   70   ╲      Non
        ╱   S>S1   ╲──────────┐
        ╲          ╱          ▼
         ╲        ╱      ┌──────────┐
          ╲──────╱       │    76    │
             │oui        └────┬─────┘
             ▼                │
        ┌──────────┐          ▼
        │    74    │     ┌──────────┐
        └──────────┘     │    78    │
                         └──────────┘
```

# FIG.3

FIG.4

FIG.6

```
┌──────────┐
│    82    │
└──────────┘
     │
     ▼
┌──────────┐
│    83    │
└──────────┘
     │
     ▼
┌──────────┐
│    84    │
└──────────┘
     │
     ▼
┌──────────┐
│    88    │
└──────────┘
     │
     ▼
┌──────────┐
│    90    │
└──────────┘
     │
     ▼
   ◇ 92 ◇  ────────▶  ┌──────────┐
                      │    96    │
                      └──────────┘
     │
     ▼
┌──────────┐
│    94    │
└──────────┘
```

┌──────────┐
│   106    │
└──────────┘
     │
     ▼
┌──────────┐
│   108    │
└──────────┘
     │
     ▼
┌──────────┐
│   110    │
└──────────┘

## FIG.5

## FIG.8

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WEI LAI et al.** A content-based bit allocation model for video streaming. *ICME,* 2004, vol. 2, 1315-1318
- **CHIH-WEI TANG.** Spatio-temporal considerations for video coding. *IEEE transactions on multimedia,* vol. 9 (2), 231-238
- **HONGLIANG LI et al.** Unsupervised video segmentation with low depth of field. *IEEE transactions on circuits and systems for video technology,* vol. 17 (12), 1742-1751
- **ZHENZHONG CHEN et al.** Dynamic bit allocation for multiple video object coding. *IEEE transactions on multimédia,* vol. 8 (6), 1117-1124
- **OSTERMANN et al.** Natural and synthetic video in MPEG4. *ICASSP,* Mai 1998, vol. 6, 3805-3808
- **SCHWARZ et al.** Overview of the scalable video coding extension of the H264/AVC standard. *IEEE transactions on circuits and systems for video technology,* vol. 17 (9), 1103-1120
- Tourapis, Au, Liou, Fast Motion Estimation using Circular Zonal Search. *Proceedings of Visual Communications and Image Processing,* 1999
- **O. LE MEUR ; P. LE CALLET ; D. BARBA.** Predicting visual fixation on video based on low-level visual features. *Vision Research,* Septembre 2007, vol. 47/19, 2483-2498
- *Joint Draft ITU-T Rec. H.264 | ISO/IEC 14496-10 / Amd.3 Scalable video coding,* 29 Juin 2007